(19) **Europäisches Patentamt**

**European Patent Office**

**Office européen des brevets**

(11) **EP 1 083 662 B1**

(12) **EUROPEAN PATENT SPECIFICATION**

(45) Date of publication and mention
of the grant of the patent:
**04.10.2006 Bulletin 2006/40**

(51) Int Cl.:
*H03M 13/00* (2006.01)      *H04L 1/08* (2006.01)

(21) Application number: **00911290.5**

(86) International application number:
**PCT/JP2000/001755**

(22) Date of filing: **23.03.2000**

(87) International publication number:
**WO 2000/060748 (12.10.2000 Gazette 2000/41)**

(54) **RADIO COMMUNICATION DEVICE AND ENCODING METHOD**

RADIOKOMMUNIKATIONSVORRICHTUNG UND KODIERVERFAHREN

DISPOSITIF DE RADIOCOMMUNICATION ET PROCEDE DE CODAGE

(84) Designated Contracting States:
**AT BE CH CY DE DK ES FI FR GB GR IE IT LI LU MC NL PT SE**

(30) Priority: **31.03.1999 JP 9207899**

(43) Date of publication of application:
**14.03.2001 Bulletin 2001/11**

(60) Divisional application:
**05001135.2 / 1 536 587**

(73) Proprietor: **MATSUSHITA ELECTRIC INDUSTRIAL CO., LTD.**
**Kadoma-shi, Osaka 571-8501 (JP)**

(72) Inventor: **KAJITA, Kuniyuki**
**Yokohama-shi, Kanagawa 236-0042 (JP)**

(74) Representative: **Grünecker, Kinkeldey, Stockmair & Schwanhäusser Anwaltssozietät**
**Maximilianstrasse 58**
**80538 München (DE)**

(56) References cited:
WO-A-93/14588          WO-A-98/52365
WO-A1-92/00639          WO-A1-93/14588

- **AKIHIKO W ET AL: "Study on wideband CDMA system in burst error environment" PERSONAL WIRELESS COMMUNICATIONS, 1997 IEEE INTERNATIONAL CONFERENCE ON MUMBAI, INDIA 17-19 DEC. 1997, NEW YORK, NY, USA, IEEE, US, 17 December 1997 (1997-12-17), pages 324-328, XP010268141 ISBN: 0-7803-4298-4**

**Description**

Technical Field

The present invention relates to a radio communication apparatus and a coding processing method employed in mobile radio communication.

Background Art

In mobile radio communication, particularly in CDMA radio communication, Rate matching processing is performed in order to enhance an effect of error correction, and/or in order to transmit data such as a packet, ISDN and so forth while coupling the data. The Rate matching processing is repetition processing for increasing the number of bits of data in order to adjust coded data to frame length, or puncturing processing for reducing the number of bits of data in order to adjust coded data to frame length. For instance, in a transmitter side, in the case where the transmitter side causes the number of bits of data to be increased, in a receiver side, the receiver side is required to perform processing of decreasing of the number of bits of data. In this case, since the transmitter side performs repetition, it is possible to increase a transmission power.

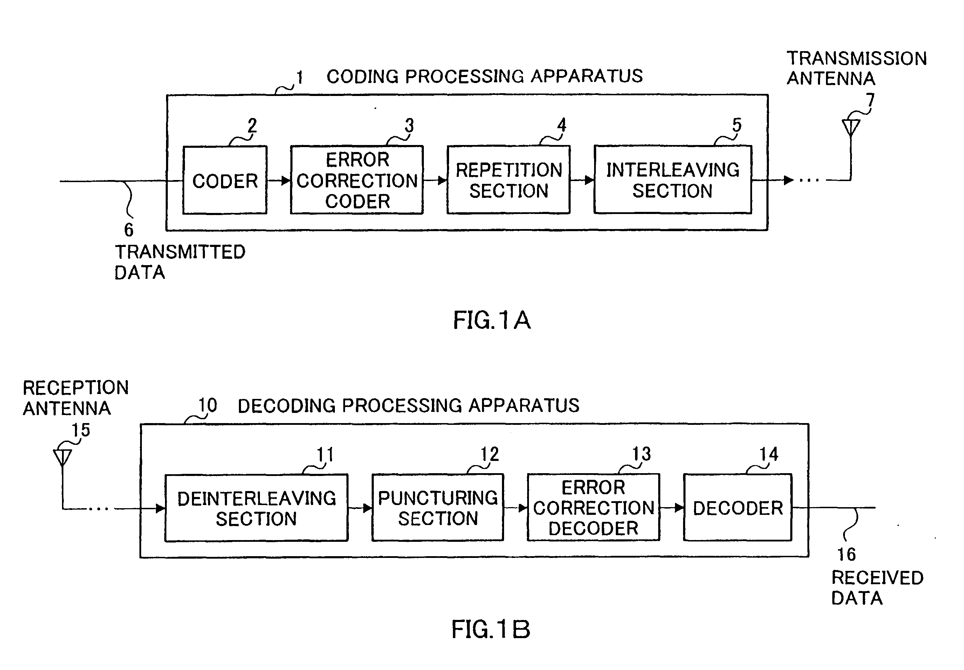

FIG. 1A is a block diagram illustrating a configuration of a conventional coding processing apparatus in the case where repetition is performed in a transmitter side. Also, FIG. 1B is a block diagram illustrating a configuration of a conventional decoding processing apparatus in the case where repetition is performed in a transmitter side.

The coding processing apparatus 1 includes a coder 2, an error correction coder 3, a repetition section 3, and an interleaving section 5. The decoding processing apparatus 10 includes a deinterleaving section 11, a puncturing section 12, an error correction decoder 13, and a decoder 14.

In the transmitter side, transmitted data 6 is coded in the coder 2. This coded data is subjected to error correction coding processing such as convolutional coding and so forth in the error correction coder 3 before the number of bits is increased in the repetition section 4. The data after repetition is rearranged in the interleaving section 5. Subsequently, the data is subjected to predetermined modulation processing and radio processing and so forth, before being transmitted from a transmission antenna 7.

On the other hand, in the receiver side, a signal received by a reception antenna 15 is subjected to predetermined radio processing and demodulation processing and so forth before inverse rearrangement against the interleaving is performed in the deinterleaving section 11. In this rearranged data, the number of bits which are increased in the transmitter side once are decreased in the puncturing section 12. The data is subjected to error correction by Viterbi decoding and so forth in the error correction decoder 13. This data after error correcting is decoded in the decoder 14. According to the above processing, received data 16 is obtained.

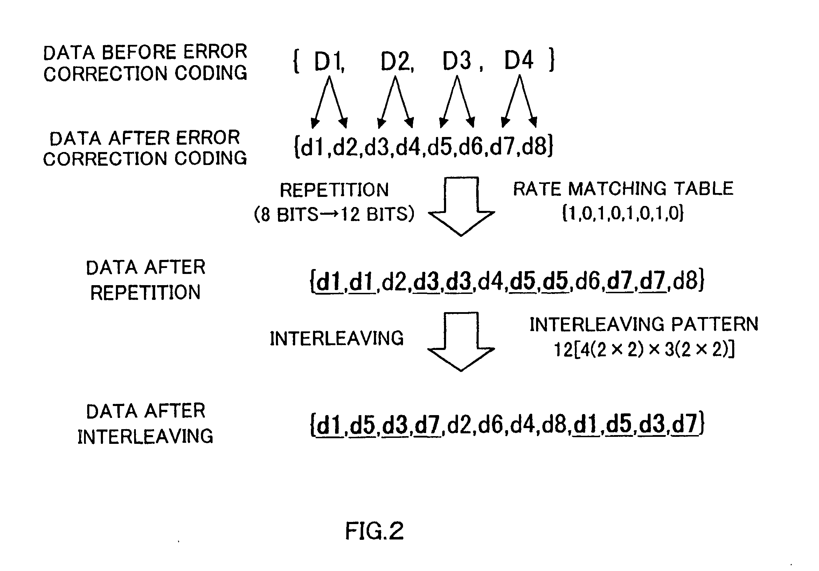

FIG. 2 is a view showing data arrangement in the case where repetition is performed with the conventional coding processing apparatus employed. Now, data outputted from the coder 2 is taken to be {D1, D2, D3, D4}. The data is subjected to error correction coding processing with "code rate = 1/2" in the error correction coder 3. As a result, in cases where D1 becomes d1 and d2, D2 becomes d3 and d4, D3 becomes d5 and d6, and D4 becomes d7 and d8, data inputted to the repetition section 4 becomes data of 8 bits of {d1, d2, d3, d4, d5, d6, d7, d8}. Further, the number of bits per 1 frame is set to 12 bits.

The repetition section 4 is provided with a Rate matching table. Further, a pattern of "0 and 1" is stored in the Rate matching table. The pattern of "0 and 1" causes a distribution of increase of bits within a frame to be even. Now, if the Rate matching table is taken to be {1, 0, 1, 0, 1, 0, 1, 0}, since bits corresponding to "1" are increased, thus d1, d3, d5, and d7 showed by under lines are increased.

Accordingly, data after repetition becomes {d1, d1, d2, d3, d3, d4, d5, d5, d6, d7, d7, d8}. Careful observation of the data after repetition reveals that there exist two increased bits and one not increased bit within continuous three bits, thus it is found that a distribution of increase of bits becomes even within a frame.

The data after repetition is subjected to interleaving in accordance with for instance an interleaving pattern ; 12 [4 [2 × 2] × 3 [2 × 2]] . According to this processing, the data after interleaving becomes {d1, d5, d3, d7, d2, d6, d4, d8, d1, d5, d3, d7}. According to these processing, it is possible to avoid a burst error in a propagation path in some degrees. Accordingly, it is possible to improve bit error rate characteristic in some degrees when the receiver side corrects errors.

However, in the above-described conventional coding processing apparatus, the increased bits caused by repetition are partial to a position within a frame according to an interleaving pattern. For this reason, an effect of the repetition deteriorates remarkably. Consequently, the bit error rate characteristic deteriorates when the receiver side corrects errors.

Specifically, for instance, in an interleaving pattern showed in FIG. 2, increased bits "d1, d3, d5, d7" are partial to both sides within the frame. Accordingly, in the case where a burst error occurs in a propagation path at portions with not-increased bits d2, d4, d6, d8", the bit error rate characteristic deteriorates when the receiver side corrects errors.

WO 98/52365 relates to a subscriber unit and method for use in a wireless communication system. In particular, the system and method aims to provide an improved method for high rate CDMA wireless communication in context of the reverse link transmission portion of a cellular communications system.

A first set of data is received by a channel encoder, which generates a code symbol stream configured for performing BPSK modulation that is received by a modulator. The modulator received power control data and pilot data, which are modulated along with the BPSK (and QPSK) encoded data in accordance with CDMA techniques to generate a set of modulation symbols received by a radio frequency processing system.

The channel encoder comprises a block interleaver that performs bit interleaving on code symbols to provide time diversity for more revival transmission in fast fading environments. The resulting interleaver symbols are received by a very starting point repeater that repeats the interleaved symbol sequence a sufficient number of times to provide a concentrate symbol stream that corresponds to the outputting frames having a constant number of symbols. The document also suggests that the repeater may also be placed before the block interleaver.

Disclosure of Invention

An object of the present invention is to provide a radio communication apparatus and a coding processing method in which resistibility to a burst error in a propagation path is high, and the apparatus and method are capable of scheming improvement of communication quality.

The inventor of the present invention notes a cause why the increased bits due to the repetition are partial to a portion within a frame. In the case where the repetition is performed at a time about the whole data before interleaving, the increased bits due to the repetition are partial to a portion within the frame. The inventor finds that the repetition is separated to be performed before and after interleaving in well-balanced condition, so that it is possible to prevent maldistribution of the increased bits due to the repetition within the frame, and the inventor achieves the present invention.

Accordingly, in order to achieve the above-described object, in the present invention, roughly half the number of bits increased due to the repetition are increased in accordance with a repetition before interleaving, while remaining the number of bits increased due to the repetition are increased in accordance with a repetition after interleaving.

Brief Description of Drawings

FIG. 1A is a block diagram illustrating a configuration of a conventional coding processing apparatus;

FIG. 1B is a block diagram illustrating a configuration of a conventional decoding processing apparatus;

FIG. 2 is a view showing data arrangement in the case where repetition is performed with the conventional coding processing apparatus employed;

FIG. 3A is a block diagram illustrating a configuration of a coding processing apparatus according to an embodiment 1 of the present invention;

FIG. 3B is a block diagram illustrating a configuration of a decoding processing apparatus according to an embodiment 1 of the present invention;

FIG. 4 is a block diagram illustrating a configuration of a repetition section and a puncturing section according to the embodiment 1 of the present invention;

FIG. 5 is a flowchart for explaining operation of a first repetition section according to the embodiment 1 of the present invention;

Fig. 6 is a flowchart for explaining operation of a second repetition section according to the embodiment 1 of the present invention;

FIG. 7 is a flowchart for explaining operation of a first puncturing section according to the embodiment 1 of the present invention;

FIG. 8 is a flowchart for explaining operation of a second puncturing section according to the embodiment 1 of the present invention;

FIG. 9 is a view showing data arrangement in the case where repetition is performed with the coding processing apparatus employed according to the embodiment 1 of the present invention;

FIG. 10A is a block diagram illustrating a configuration of a coding processing apparatus according to an example 1 of the present invention;

FIG. 10B is a block diagram illustrating a configuration of a decoding processing apparatus according to the example 1 of the present invention;

FIG. 11A is a block diagram illustrating a configuration of a coding processing apparatus according to an example 2 of the present invention; and

FIG. 11B is a block diagram illustrating a configuration of a decoding processing apparatus according to the example 2 of the present invention.

Best Mode for Carrying Out the Invention

Embodiments of the present invention are explained in detail below with reference to accompanying drawings.

(Embodiment 1)

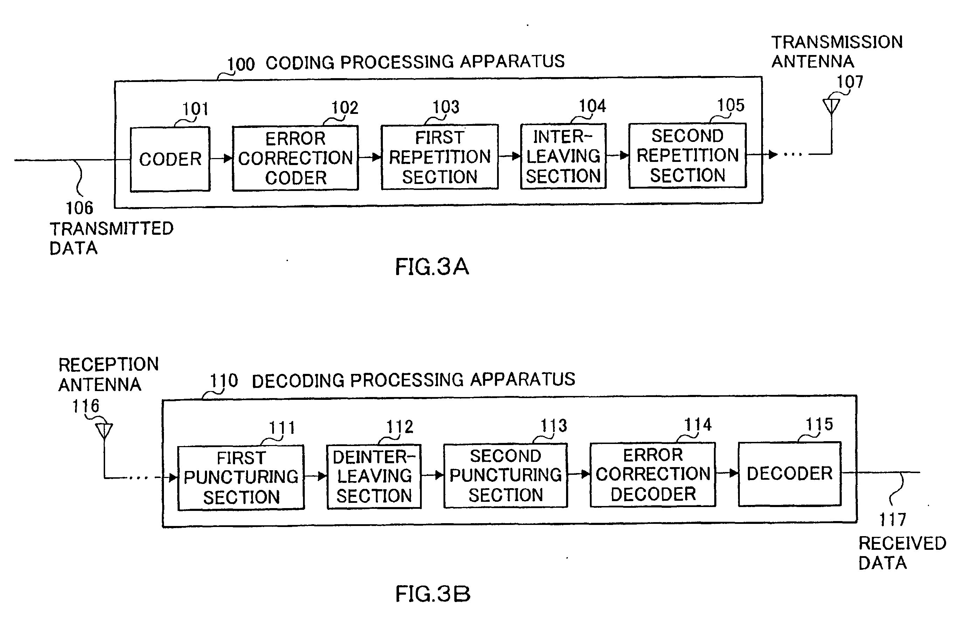

FIG. 3A is a block diagram illustrating a configuration of a coding processing apparatus according to the embodiment 1 of the present invention. Further, FIG. 3B is a block diagram illustrating a configuration of a decoding processing apparatus according to the embodiment 1 of the present invention. A coding processing apparatus 100 includes a coder 101, an error correction coder 102, a first repetition section 103, an interleaving section 104, and a second repetition section 105. In the meantime, a decoding processing apparatus 110 includes a first puncturing section 111, a deinterleaving section 112, a second puncturing section 113, an error correction decoder 114, and a decoder 115.

In the transmitter side, transmitted data 106 is coded in the coder 101. The coded data is subjected to error correction coding processing such as convolutional coding and so forth in the error correction coder 102, before being outputted to the first repetition section 103. The data after error correction coding processing is subjected to a first repetition as describe later in the first repetition section 103. The data after the first repetition is rearranged in the interleaving section 104, before being subjected to a second repetition as describe later in the second repetition section 105. The data after the second repetition is subjected to predetermined modulation processing and predetermined radio processing and so forth thereafter. Then the data is transmitted from a transmission antenna 107.

On the other hand, in the receiver side, a signal received by a reception antenna 116 is subjected to predetermined radio processing and predetermined demodulation processing and so forth. The data after predetermined radio processing and predetermined demodulation processing is subjected to a first puncturing which is inverse processing against the second repetition in the first puncturing section 111. The data after the first puncturing is subjected to an inverse rearrangement against the interleaving in the transmitter side in the deinterleaving section 112. This rearranged data is subjected to a second puncturing which is inverse processing against the first repetition in the second puncturing section 113. The data after the second puncturing is subjected to error correction by Viterbi decoding and so forth in the error correction decoder 114, before being decoded in the decoder 115. According to the above processing, received data 117 is obtained.

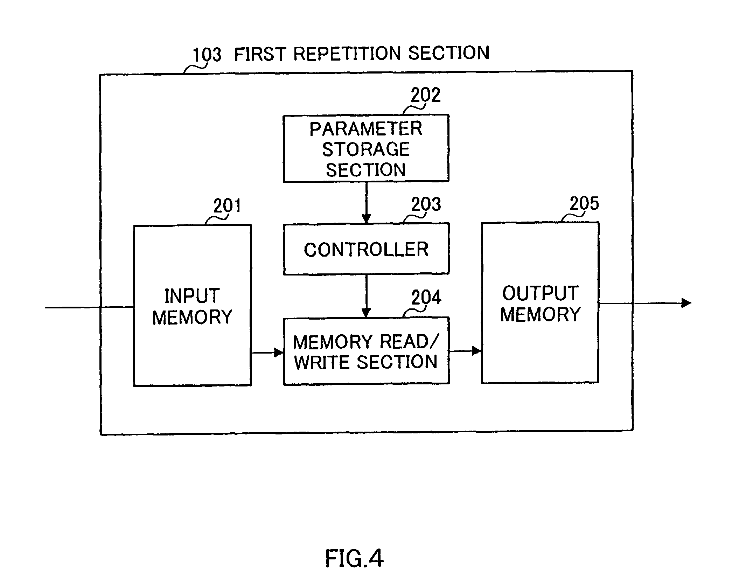

Next, there will be described about configuration of the first repetition section 103 while employing the block diagram illustrated in FIG. 4. In the first repetition section 103, an input memory 201 temporary stores therein data being subjected to error correction coding. A parameter storage section 202 stores therein various kinds of parameters necessary for performing repetition. A controller 203 outputs a control signal for performing read/write of data to a memory read/write section 204 on the basis of various kinds of parameters stored in the parameter storage section 202. The memory read/write section 204 reads the data from the input memory 201 successively, and outputs the data while increasing the number of bits to be targeted bits to an output memory 205 on the basis of the control signal. The output memory 205 stores the data outputted successively from the memory read/write section 204 up to the state where the data for one frame is completed. Then the output memory 205 outputs the data for one frame at the time when the data for one frame is completed.

Further, a configuration of the second repetition section 105 is roughly the same as that of the first repetition section 103. Accordingly, concerning the second repetition section 105, an explanation about the configuration is omitted. There will be explained about only operation in an operation explanation describe later. Furthermore, also configurations of the first puncturing section 111 as well as the second puncturing section 113 are roughly the same as the configuration of the first repetition section 103. Accordingly, about the first puncturing section 111 as well as the second puncturing section 113, an explanation about the configuration is omitted. There will be explained about only operation in an operation explanation as describe later.

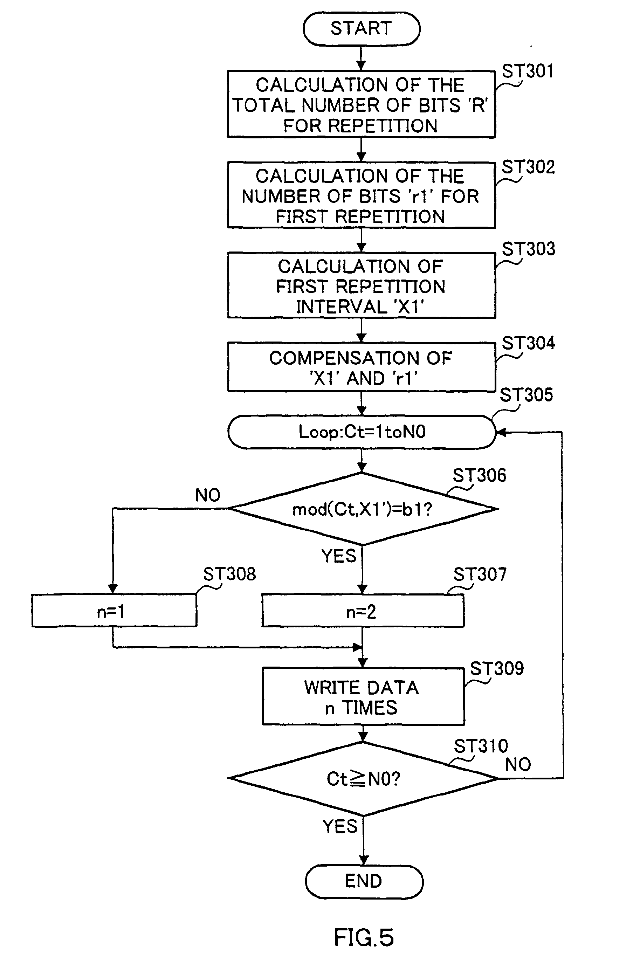

Next, there will be explained about operation of the first repetition section 103. FIG. 5 is a flowchart for explaining operation of the first repetition section 103. Firstly, in ST301, the controller 203 calculates increased the number of bits namely the total number of bits 'R' for repetition in accordance with an expression (1) from the number of bits 'N' per one frame stored in the parameter storage section 202 and the number of bits 'N0' before repetition.

$$ R = N - N0 \qquad (1) $$

Next, in ST302, the controller 203 calculates the number of bits 'r1' for the first repetition. In order to perform repetition to the data while separating repetition into two stages in well-balanced condition, 'r1' is calculated in such a way of showing of an expression (2) with 'R' employed.

$$r1 = R/2 \text{ (rounding off less than a decimal point)} \quad (2)$$

Next, in ST303, the controller 203 calculates a first repetition interval 'X1' that means whether the controller 203 performs the first repetition in every how many bits in accordance with an expression (3).

$$X1 = N0/r1 \text{ (rounding off less than a decimal point)} \quad (3)$$

Next, in ST304, the controller 203 performs compensation of 'r1', and 'X1'. This compensation is one causing the first repetition to be executed in accordance with a code rate to be performed according to expressions (4) to (6). Specifically, for instance, in the case where a code rate of data is 1/2, the first repetition is performed in every the number of bits to be multiples of 2, while in the case where a code rate of data is 1/3, the first repetition is performed in every the number of bits to be multiples of 3. Thus 'r1' and 'X1' are compensated in accordance with above described manner.
Firstly, the controller 203 performs the remainder calculation showed in an expression (4).

$$mod(X1 + m, C) = 0 \quad m \geqq 0 \quad (4)$$

Here, 'C' is an inverse number of a code rate of data, and this expression (4) is one for calculating the minimum 'm' causing the remainder to be '0'(zero) when 'X1 + m' is divided by 'C'. The controller 203 calculates a compensated value 'X1''' of 'X1' in accordance with an expression (5) while employing 'm' calculated by this expression (4). According to this processing, 'X1' is compensated into 'X1'''.

$$X1' = X1 + m \quad (5)$$

Further, the controller 203 calculates compensated value 'r1''' of 'r1' in accordance with an expression (6) while employing ' X1''' calculated by the expression (5). According to this processing, 'r1' is compensated into 'r1''' .

$$r1' = N0/X1' \text{ (rounding off less than decimal point)} \quad (6)$$

Subsequently, a value of a counter 'Ct' set in the controller 203 is added one by one from '1'(one). Then, processing of ST305 to ST310 is performed repeatedly over 'N0' times up to the state where the value of the counter 'Ct' becomes 'N0'. In ST306, the controller 203 performs the remainder calculation of an expression (7).

$$mod(Ct, X1') = b1 \quad (7)$$

Here, 'b1' is a parameter for setting whether the first repetition is started from how many numbers of bits of a frame. The 'b1' is set in the parameter storage section 202 beforehand.
In ST306, in the case where the remainder of the division of dividing 'Ct' by 'X1''' becomes equal to 'b1', in ST307, the controller 203 sets the number of times 'n' of data output to '2'. in ST306, in the case where the remainder of the division of dividing 'Ct' by X1″ does not become equal to 'b1', in ST308, the controller 203 sets the number of times 'n' of data output to '1'.

In ST309, the memory read/write section 204 reads the data stored in the input memory 201 one bit by one bit to write to the output memory 205 over 'n' times. Namely, concerning the bit set to 'n=2', the number of bits is increased.

According to a processing-flow described-above, the first repetition of causing the number of bits to be increased for only the number of bits 'r1″ roughly half the number of total bits 'R' for the repetition is performed. Concerning the data after the first repetition, rearrangement of data is performed in accordance with the interleaving pattern in the interleaving section 104, subsequently the data is subjected to the second repetition in the second repetition section 105.

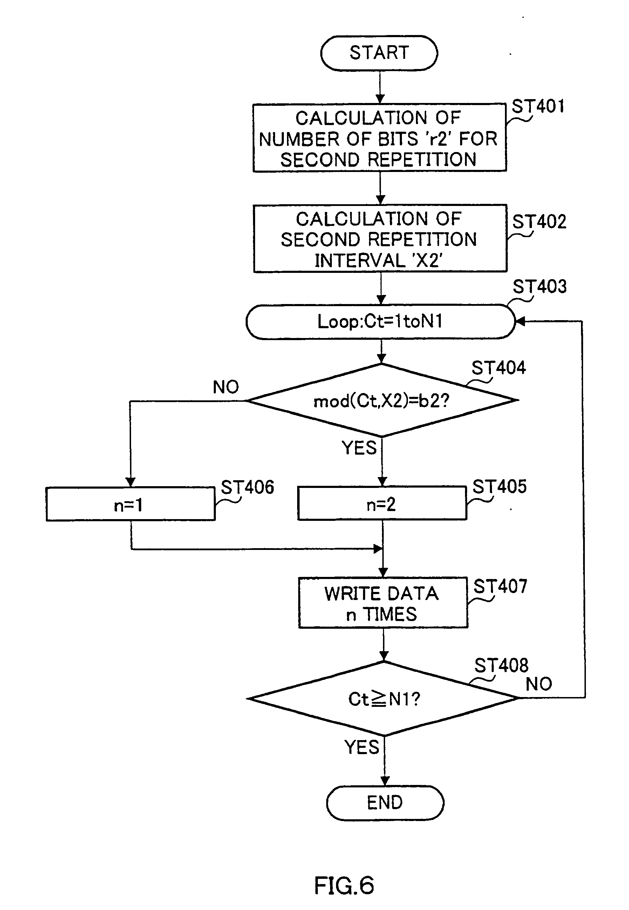

Next, there will be described about operation of the second repetition section 105. FIG. 6 is a flowchart for explaining operation of the second repetition section 105.

Firstly, in ST401, the controller 203 within the second repetition section 105 calculates the number of bits 'r2' for the second repetition in accordance with an expression (8) from the number of total bits 'R' for the repetition calculated by the first repetition section 103 and compensated number of bits 'r1″ for the first repetition.

$$r2 = R - r1' \qquad (8)$$

Next, in ST402, the controller 203 calculates a second repetition interval 'X2' that means whether the controller 203 performs the second repetition in every how many bits in accordance with an expression (9).

$$X2 = N1/r2 \ (\text{rounding off less than a decimal point}) \qquad (9)$$

Here, 'N1' is 'N1 = N0+ r1″', which represents the number of bits after the first repetition.

Subsequently, a value of the counter 'Ct' set in the controller 203 is added one by one from '1'(one). Then, processing of ST403 to ST408 is performed repeatedly over 'N1' times up to the state where the value of the counter 'Ct' becomes 'N1'. In ST404, the controller 203 performs the remainder calculation of an expression (10).

$$\text{mod}(Ct, X2) = b2 \qquad (10)$$

Here, 'b2' is a parameter for setting whether the second repetition is started from how many numbers of bits of a frame. This 'b2' is set in the parameter storage section 202 beforehand.

In ST404, in the case where the remainder of the division of dividing 'Ct' by 'X2' becomes equal to b2', in ST405, the controller 203 sets the number of times 'n' of data output to '2'. While, in ST404, in the case where the remainder of the division of dividing 'Ct' by 'X2' does not become equal to 'b2', in ST406, the controller 203 sets the number of times 'n' of data output to '1'.

In ST407, the memory read/write section 204 reads the data stored in the input memory 201 one bit by one bit to write to the output memory 205 over 'n' times. Namely, concerning the bit set to 'n=2', the number of bits is increased.

According to the processing-flow described-above, the second repetition is performed to the data after the first repetition. According to this processing, a repetition satisfying the total number of bits per one frame is performed.

Next, there will be described concerning processing of the receiver side. In the receiver side, the first puncturing section 111 and the second puncturing section 113 perform inverse processing against the transmitter side, namely perform puncturing, to the bits increased by the first repetition and the second repetition in the transmitter side. According to this processing, received data 117 is obtained. Specific operation is as follows.

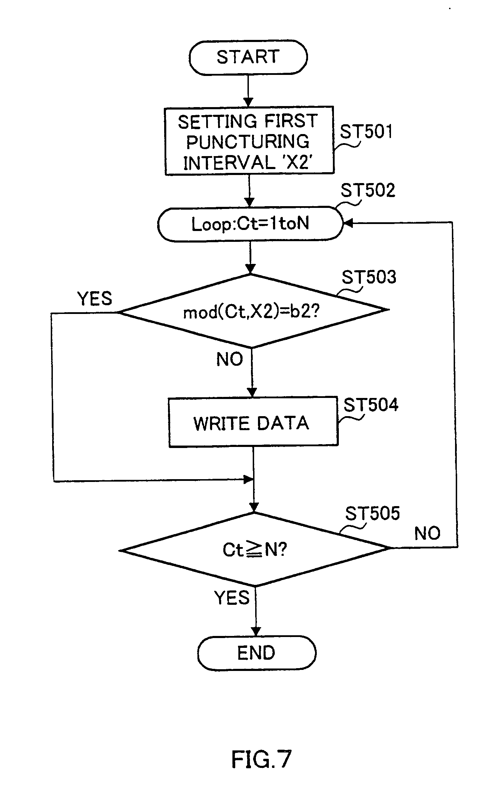

Firstly, there will be described about operation of the first puncturing section 111. FIG. 7 is a flowchart for explaining operation of the first puncturing section 111. The first puncturing section 111 performs processing for decreasing the bits increased in the second repetition section 105.

In ST501, a first puncturing interval 'X2' that means whether the first puncturing is performed in every how many bits is set to the parameter storage section 202 in accordance with control data transmitted from the transmitter side. This 'X2' is equal to the second repetition interval 'X2'.

Subsequently, the processing of ST502 to ST505 is performed repeatedly over 'N' times up to the state where a value of the counter 'Ct' set in the controller 203 is added one by one from '1'(one) to come into 'N'. Here, 'N' is 'N = N0 + r1' + r2', thus representing the number of bits after the second repetition, namely representing the number of bits per one frame. In ST503, the controller 203 performs the remainder calculation of an expression (11).

$$\mathtt{mod(Ct,\ X2)\ =\ b2\qquad(11)}$$

Here, 'b2' is equal to 'b2' which is employed when the second repetition is performed. The 'b2' is set to the parameter storage section 202 in accordance with the above control signal.

Next, in ST504, the memory read/write section 204 reads data stored in the input memory 201 one bit by one bit. Then, in the case where the remainder of the division of dividing 'Ct' by 'X2' does not become equal to 'b2', the memory read/write section 204 writes the read data to the output memory 205 once. While in the case where the remainder of the division of dividing 'Ct' by 'X2' becomes equal to 'b2', the memory read/write section 204 abolishes the read data.

According to the processing-flow described-above, the first puncturing is performed to the bits increased by the second repetition. Concerning the data after the first puncturing, an inverse rearrangement against the rearrangement of data performed in the interleaving section 104 is performed in the deinterleaving section 112. Subsequently, the data is subjected to the second puncturing in the second puncturing section 113.

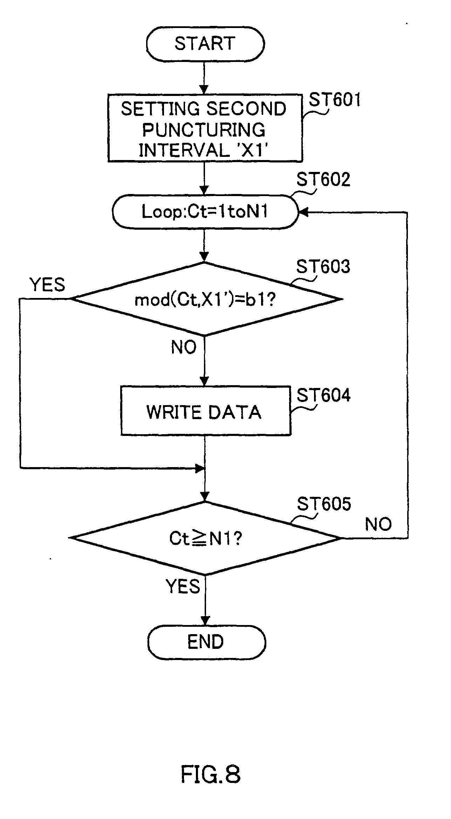

Next, there will be described operation of the second puncturing section 113. FIG. 8 is a flowchart for explaining operation of the second puncturing section 113. The second puncturing section 113 performs processing for decreasing the bits increased by the first repetition section 103.

Firstly, in ST601, a second puncturing interval 'X1″' that means whether the second puncturing is performed in every how many bits is set to the parameter storage section 202 in accordance with the above control data. This 'X1″' is equal to the compensated first repetition interval "X1".

Subsequently, the processing of ST602 to ST605 is performed repeatedly over 'N1' times up to the state where a value of the counter 'Ct' set in the controller 203 is added one by one from '1'(one) to come into 'N1'. This 'N1' is equal to 'N1' which is employed in the second repetition to be set to the controller 203 in accordance with the above control signal.

In ST603, the controller 203 performs the remainder calculation of an expression (12).

$$\mathtt{mod(Ct,\ X1')\ =\ b1\qquad(12)}$$

Here, 'b1' is equal to the 'b1' employed when the first repetition is performed, to be set to the parameter storage section 202 in accordance with the above control signal.

Next, in ST604, the memory read/write section 204 reads the data stored in the input memory 201 one bit by one bit. Then in the case where the remainder of the division of dividing 'Ct' by 'X1″' does not become equal to 'b1', the memory read/write section 204 writes the read data to the output memory 205 once. While in the case where the remainder of the division of dividing 'Ct' by 'X1″' becomes equal to 'b2', the memory read/write section 204 abolishes the read data.

According to the processing-flow described-above, the second puncturing is performed to the bits increased by the first repetition. The data after the second puncturing is subjected to error correction by Viterbi decoding and so forth in the error correction decoder 114, before being decoded in the decoder 115. According to this processing, received data 117 is obtained.

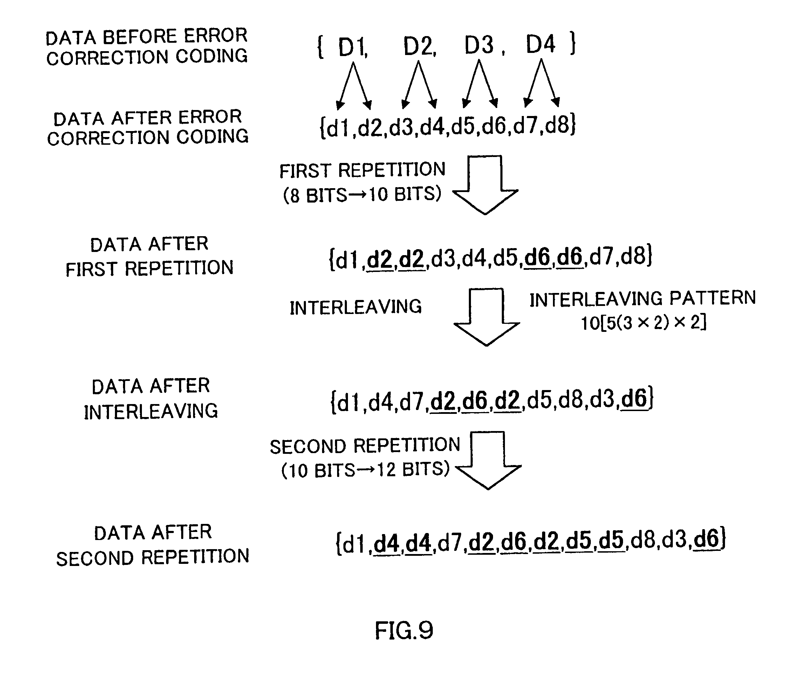

Next, there will described the circumstances in detail in which transmitted data is subjected to repetition and interleaving due to the coding processing apparatus 100 of the present embodiment while employing FIG. 9. Now, data outputted from the coder 101 is taken to be {D1, D2, D3, D4}. The data is subjected to error correction coding processing with "code rate = 1/2" in the error correction coder 102. As a result, in cases where 'D1' becomes 'd1', and 'd2', 'D2' becomes 'd3', and 'd4', 'D3' becomes 'd5', and 'd6', and 'D4' becomes 'd7', and 'd8', data inputted to the first repetition section 103 becomes data of 8 bits of {d1, d2, d3, d4, d5, d6, d7, d8}. Further, the number of bits per one frame is 12 bits.

In the first place, the first repetition section 103 performs the first repetition in accordance with processing-flow of FIG. 5. Firstly, in ST301 to ST303, 'R', 'r1', and 'X1' are calculated in accordance with above expressions (1) to (3). Following result is obtained.

$$\mathtt{R\ =\ N\ -\ N0\ =\ 12\ -\ 8\ =\ 4\qquad(13)}$$

$$r1 = R/2 = 4/2 = 2 \qquad (14)$$

$$X1 = N0/r1 = 8/2 = 4 \qquad (15)$$

Next, in ST304, 'r1' and 'X1' are compensated in accordance with above expressions (4) to (6). Now, since the code rate of the error correction coding processing is '1/2', 'C' becomes 'C=2'. Consequently, above expression (4) is calculated as following way.

$$mod(X1 + m, C) = 0$$

$$mod(4 + m, 2) = 0$$

$$\therefore m = 0 \qquad (16)$$

Here, since 'm' is 'm=0', following result is obtained in accordance with above expressions (5), and (6).

$$X1' = X1 = 4 \qquad (17)$$

$$r1' = r1 = 2 \qquad (18)$$

Next, in ST305 to ST310, the number of bits of corresponding bits is increased in accordance with the above expression (7) up to the state where 'Ct' becomes 'N0' from '1'. Now, in the case where 'b1' is set to "b1=2", in accordance with the above expression (7), the number of bits of 'd2' to be data of the second bit as well as the number of bits of 'd6' to be data of the sixth bit are increased, thus the first repetition is performed. Consequently, the data after the first repetition becomes {d1, d2, d2, d3, d4, d5, d6, d6, d7, d8} as showed in FIG. 9. Further, the data showed by underline in FIG. 9 are ones whose number of bits is increased due to repetition.

Next, concerning the data after the first repetition, rearrangement of data is performed in accordance with interleaving pattern "10[5[3×2]×2]" in the interleaving section 104. As a result, the data after interleaving becomes {d1, d4, d7, d2, d6, d2, d5, d8, d3, d6}.

Next, the second repetition section 105 performs the second repetition to the data after interleaving in accordance with the processing-flow of FIG. 6. Firstly, in ST401 to ST402, in accordance with the above expressions (8) to (9), 'r2' and 'X2' are calculated as follows:

$$r2 = R - r1' = 4 - 2 = 2 \qquad (19)$$

$$X2 = N1/r2 = 10/2 = 5 \qquad (20)$$

Next, in ST403 to ST408, the number of bits of corresponding bits is increased in accordance with the above expression (10) up to the state where 'Ct' becomes 'N1' from '1'. Now, in the case where 'b2' is set to 'b2=2', in accordance with the above expression (10), the number of bits of 'd4' to be data of the second bit as well as the number of bits of 'd5' to be data of the seventh bit are increased, thus the second repetition is performed. Consequently, the data after the second repetition becomes {d1, d4, d4, d7, d2, d6, d2, d5, d5, d8, d3, d6} as showed in FIG. 9.

Thus, according to the coding processing apparatus and the decoding processing apparatus of the present embodiment, since repetition is performed at two stages before and after interleaving, it is possible to prevent that the bits increased due to repetition exist while being partial to one position within a frame. For that reason, it is possible to improve a bit error rate characteristic when the receiver side performs error correction in comparison with the conventional coding processing apparatus and the conventional decoding processing apparatus in which repetition is performed only once before interleaving.

Further, in the above specific example, in the case where the interleaving pattern is 10[5 [3×2]×2], an effect of the present embodiment becomes the most remarkable. However, even though an interleaving pattern is another one, it can be observed that the present embodiment has an effect.

Furthermore, in the above specific example, there is described the embodiment while setting various kinds of parameters arbitrarily. However, it is nothing but one example. Accordingly, the effect of the present embodiment is not observed while being limited from values of these parameters, but the effect of the present embodiment is observed even though parameters adopt another values.

(example 1)

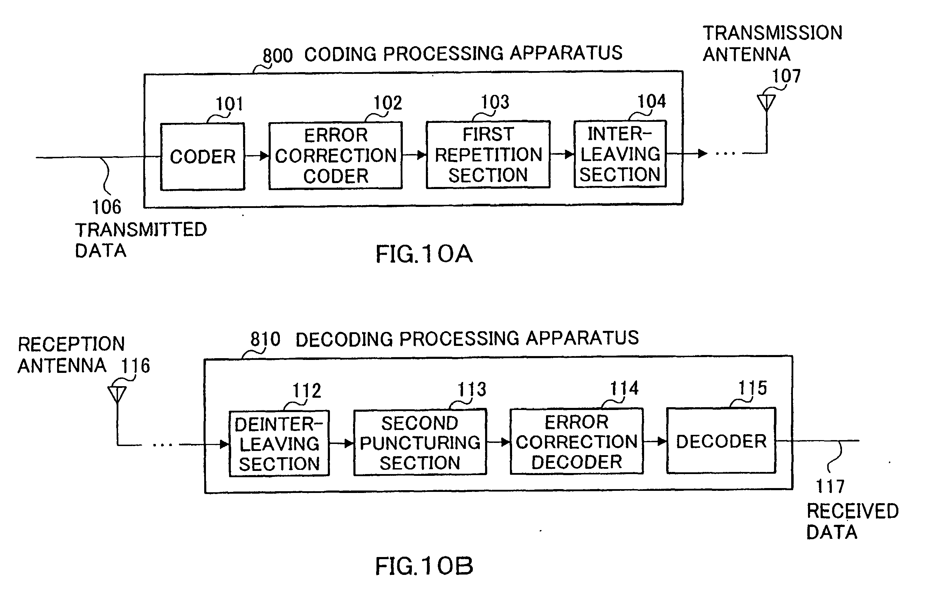

Next, there will be described an example 1 of the present invention. FIG. 10A is a block diagram illustrating a configuration of a coding processing apparatus according to the example 1 of the present invention. Further, FIG. 10B is a block diagram illustrating a configuration of a decoding processing apparatus according to the example 1 of the present invention. In a coding processing apparatus 800, the configuration of the coding processing apparatus 800 is one in which the second repetition section 105 is removed from the coding processing apparatus 100 of the embodiment 1. Another configuration and operation of respective sections are the same as that of coding processing apparatus 100.

Consequently, in a transmitter side, the data which is subjected to the error correction coding processing in the error correction coder 102 is subjected to a first repetition by the first repetition section 103 in which 'r1' calculated in ST302 at the processing-flow showed in FIG. 5 described-above is taken to be 'r1=R'. The data after the first repetition is rearranged in the interleaving section 104. Subsequently, the data is subjected to predetermined modulation processing and predetermined radio processing and so forth, before being transmitted from the transmission antenna 107.

On the other hand, in a decoding processing apparatus 810, the configuration of the decoding processing apparatus 810 is one in which the first puncturing section 111 is removed from the decoding processing apparatus 110 of the embodiment 1. Another configuration and operation of respective sections are the same as that of decoding processing apparatus 110.

Consequently, in the receiver side, data to which inverse rearrangement against the interleaving of the transmitter side is performed in the deinterleaving section 112 is subjected to inverse second puncturing against the first repetition in accordance with the processing-flow showed in FIG. 8 described above by the second puncturing section 113. The data after the second puncturing is subjected to the error correction by Viterbi decoding and so forth in the error correction decoder 114.

Thus, according to the coding processing apparatus and the decoding processing apparatus of the present embodiment, the repetition is performed while determining increased bits in accordance with the code rate such that in the case where the code rate of the data is '1/2', the increased bits are determined in every the number of bits of multiples of 2, and such that in the case where the code rate of the data is '1/3', the increased bits are determined in every the number of bits of multiples of 3. Consequently, according to the coding processing apparatus and the decoding processing apparatus of the present example, it is possible to prevent that the repetition is performed repeatedly to a plurality of data after error correction coding, which are generated from the same data before error correction coding, caused by error correction coding processing. Thus, according to the coding processing apparatus and the decoding processing apparatus of the present example, since it is possible to enhance an effect of the error correction coding, it is possible to improve a bit error rate characteristic when the receiver side performs error correction in comparison with the conventional coding processing apparatus and the conventional decoding processing apparatus.

(example 2)

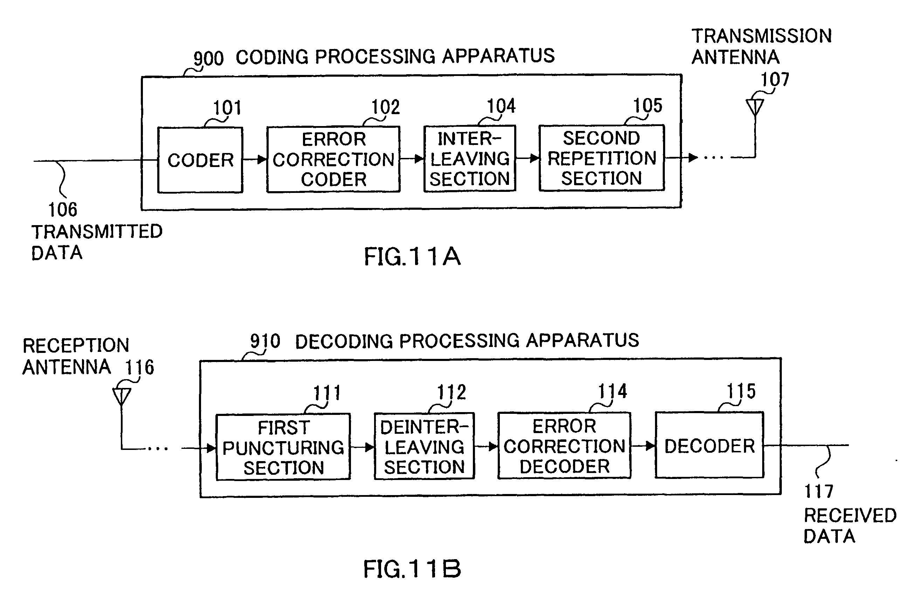

Next, there will be described an example 2 of the present invention. FIG. 11A is a block diagram illustrating a configuration of a coding processing apparatus according to an example 2 of the present invention. Further, FIG. 11B is a block diagram illustrating a configuration of a decoding processing apparatus according to the example 2 of the present invention.

In a coding processing apparatus 900, the configuration of the coding processing apparatus is one in which the first repetition section 103 is removed from the coding processing apparatus 100 of the first embodiment. Another configuration and operation of respective sections are the same as that of the coding processing apparatus 100.

Consequently, in the transmitter side, the data which is rearranged in the interleaving section 104 is subjected to a second repetition by the second repetition section 105 in which 'r2' calculated in ST401 at the processing flow showed in FIG. 6 described-above is taken to be 'r2=R'. The data after the second repetition is subjected to predetermined modulation processing and predetermined radio processing and so forth, before being transmitted from the transmission antenna 107.

On the other hand, in a decoding processing apparatus 910, the configuration is one in which the second puncturing section 113 is removed from the decoding processing apparatus 110 of the embodiment 1. Another configuration and operation of respective sections are the same as that of the decoding-coding processing apparatus 110.

Consequently, in the receiver side, a signal received by the reception antenna 116 is subjected to predetermined radio processing and predetermined demodulation processing and so forth. Subsequently, the received signal is subjected to a first puncturing which is inverse processing against the second repetition in accordance with the processing-flow showed in FIG. 7 described-above by the first puncturing section 111. Concerning the data after the first puncturing, inverse rearrangement against the interleaving of the transmitter side is performed in the deinterleaving section 112.

Thus, according to the coding processing apparatus and the decoding processing apparatus of the present example, since the repetition is performed after interleaving, it is possible to prevent that the bits increased due to repetition exist while being partial to one position within a frame. Consequently, according to the coding processing apparatus and the decoding processing apparatus of the present example, it is possible to improve a bit error rate characteristic when the receiver side performs error correction in comparison with the conventional coding processing apparatus and the conventional decoding processing apparatus in which repetition is performed before interleaving.

The coding processing apparatus and the decoding processing apparatus according to the embodiment 1 and examples 1 and 2 described-above are applicable to a base station apparatus employed in a radio communication system, and applicable to a communication terminal apparatus such as a mobile station for performing radio communication to this base station apparatus. In the case of application, since the base station apparatus and the communication terminal apparatus are mounted with the coding processing apparatus and the decoding processing apparatus, which can lower the bit error rate, it is possible to scheme improvement of communication quality.

Further, in the explanation of the above embodiment 1 and examples 1 to 2 for the sake of convenience, there is explained the embodiment and examples while separating the apparatus of the present invention into the transmitter and the receiver. However, a radio communication apparatus in a CDMA radio communication system also can be provided with both of the transmitter and the receiver.

As described-above, according to the present invention, it is possible to scheme improvement of communication quality because resistibility to a burst error in a propagation path becomes high.

Industrial Applicability

The present invention is applicable to a base station apparatus employed in a radio communication system and/or a communication terminal apparatus such as a mobile station performing radio communication between the base station apparatus and the mobile station.

**Claims**

1. A radio transmission apparatus comprising:

    a first bit repeater (103) for increasing the number of bits of data subjected to error-correction coding by repeating a part of the bits,
    an interleaver (104) for interleaving the bits, the number of which has been increased by the first bit repeater (103), and
    a second bit repeater (105) for increasing the number of interleaved bits by repeating a part of the bits output by the interleaver (104) that have not been repeated by the first bit repeater (103).

2. The radio transmission apparatus according to claim 1, further comprising:

    an error-correction coder (102) for error-correction coding a number of bits, wherein the first bit repeater (103) increases the number of error-correction coded bits.

3. The radio transmission apparatus according to claim 2, wherein the first bit repeater (103) increases the number of the error-correction coded bits in accordance with error-correction code rate.

4. A radio reception apparatus for receiving data subjected to error-correction coding whose number of bits has been increased by means of repetition before and after interleaving at a radio transmission apparatus, wherein, when increasing the number of bits after interleaving, the transmission apparatus has repeated a part of the interleaved bits that have not been repeated prior to interleaving, the radio reception apparatus comprising:

a receiver for receiving the data whose number of bits has been increased,
a first puncturing means (111) for puncturing those received bits which have been repeated after interleaving at the radio transmission apparatus, and
a de-interleaver (112) for de-interleaving the received bits whose number has been decreased by puncturing in the first puncturing means (111), and
a second puncturing means (113) for puncturing the de-interleaved bits, wherein the second puncturing means (113) is adapted to puncture those bits of the de-interleaved bits that have been repeated before interleaving at the radio transmission apparatus.

5. A communication terminal apparatus comprising the radio transmission apparatus according to one of claims 1 to 3 or the radio receiving apparatus according to claim 4.

6. A base station apparatus comprising the radio transmission apparatus according to one of claims 1 to 3 or the radio receiving apparatus according to claim 4.

7. A radio transmission method comprising:

a first step for increasing the number of bits of data subjected to error-correction coding by repeating a part of the bits, and
a second step for interleaving the bits, the number of which has been increased in the first step,
a third step for increasing the number of interleaved bits by repeating a part of the interleaved bits that have not been repeated in the first step, and
a fourth step for transmitting data including bits provided by increasing in the third step.

8. A radio reception method comprising:

a first step for receiving data subjected to error-correction coding whose number of bits has been increased before and after interleaving at a transmission side, wherein, when increasing the number of bits after interleaving at the transmission side, a part of the interleaved bits that have not been repeated prior to interleaving has been repeated,
a second step for puncturing those received bits which have been repeated after interleaving at the transmission side,
a third step for de-interleaving the received bits whose number has been decreased by puncturing in the second step, and
a fourth step for puncturing the de-interleaved bits, wherein those bits of the de-interleaved bits are punctured that have been repeated before interleaving at the transmission side.

**Patentansprüche**

1. Funksendevorrichtung, die umfasst:

eine erste Bit-Wiederholungseinrichtung (103) zum Erhöhen der Bitanzahl von Daten, die einer Fehlerkorrektur-Codierung unterzogen wurden, durch Wiederholen eines Teils der Bits,
einen Interleaver (104) zum Interleaven der Bits , deren Anzahl durch die erste Bit-Wiederholungseinrichtung (103) erhöht worden ist, und
eine zweite Bit-Wiederholungseinrichtung (105) zum Erhöhen der Anzahl der dem Interleaving unterzogenen Bits durch Wiederholen eines Teils der durch den Interleaver (104) ausgegebenen Bits, die durch die erste Bit-Wiederholungseinrichtung (103) nicht wiederholt worden sind.

2. Funksendevorrichtung nach Anspruch 1, die des Weiteren umfasst:

einen Fehlerkorrektur-Codierer (102) zum Fehlerkorrektur-Codieren einer Zahl von Bits, wobei die erste Bit-Wiederholungseinrichtung (103) die Anzahl der fehlerkorrekturcodierten Bits erhöht.

3. Funksendevorrichtung nach Anspruch 2, wobei die erste Bit-Wiederholungseinrichtung (103) die Zahl der fehlerkorrekturcodierten Bits entsprechend einer Fehlerkorrektur-Codierrate erhöht.

4. Funkempfangsvorrichtung zum Empfangen von Daten, die einer Fehlerkorrektur-Codierung unterzogen wurden, deren Bitzahl durch eine Funksendevorrichtung durch Wiederholen vor und nach einem Interleaving erhöht worden ist, wobei, wenn die Zahl von Bits nach dem Interleaving erhöht wird, die Sendevorrichtung einen Teil der dem Interleaving unterzogenen Bits wiederholt hat, die vor dem Interleaving nicht wiederholt worden sind, wobei die Funkempfangsvorrichtung umfasst:

einen Empfänger zum Empfangen der Daten, deren Bitzahl erhöht worden ist,
eine erste Punktiereinrichtung (111), die die empfangenen Bits punktiert, die nach dem Interleaving durch die Funksendevorrichtung wiederholt worden sind, und
einen De-Interleaver (112), der die empfangenen Bits, deren Zahl durch Punktieren in der ersten Punktiereinrichtung (111) verringert worden ist, einem De-Interleaving unterzieht, und
eine zweite Punktiereinrichtung (113) zum Punktieren der einemDe-Interleaving unterzogenen Bits, wobei die zweite Punktiereinrichtung (113) so eingerichtet ist, dass sie die Bits der einem De-Interleaving unterzogenen Bits punktiert, die vor dem Interleaving an der Funksendevorrichtung wiederholt worden sind.

5. Kommunikations-Endgerätvorrichtung, die die Funksendevorrichtung nach einem der Ansprüche 1 bis 3 oder die Funkempfangsvorrichtung nach Anspruch 4 umfasst.

6. Basisstations-Vorrichtung, die die Funksendevorrichtung nach einem der Ansprüche 1 bis 3 oder die Funkempfangsvorrichtung nach Anspruch 4 umfasst.

7. Funksendeverfahren, das umfasst:

einen ersten Schritt, mit dem die Bitzahl von einer Fehlerkorrektur-Codierung unterzogenen Daten durch Wiederholen eines Teils der Bits erhöht wird, und
einen zweiten Schritt, mit dem die Bits, deren Anzahl in dem ersten Schritt erhöht worden ist, einem Interleaving unterzogen werden,
einen dritten Schritt, mit dem die Zahl von den Interleaving unterzogener Bits durch Wiederholen eines Teils der dem Interleaving unterzogenen Bits, die in dem ersten Schritt nicht wiederholt worden sind, erhöht wird, und
einen vierten Schritt, mit dem Daten gesendet werden, die Bits enthalten, die durch Erhöhen in dem dritten Schritt geschaffen worden sind.

8. Funkempfangsverfahren, das umfasst:

einen ersten Schritt, mit dem einer Fehlerkorrektur-Codierung unterzogene Daten empfangen werden, deren Bitzahl vor und nach einem Interleaving auf einer Sendeseite erhöht worden ist, wobei, wenn die Bitzahl nach dem Interleaving auf der Sendeseite erhöht wird, ein Teil der dem Interleaving unterzogenen Bits, die vor dem Interleaving nicht wiederholt worden sind, wiederholt worden ist,
einen zweiten Schritt, mit dem die empfangenen Bits punktiert werden, die nach Interleaving auf der Sendeseite wiederholt worden sind,
einen dritten Schritt, mit dem die empfangenen Bits einem De-Interleaving unterzogen werden, deren Zahl durch Punktieren in dem zweiten Schritt verringert worden ist, und
einen vierten Schritt, mit dem die dem De-Interleaving unterzogenen Bits punktiert werden, wobei die Bits der dem De-Interleaving unterzogenen Bits punktiert werden, die vor dem Interleaving auf der Sendeseite wiederholt worden sind.

## Revendications

1. Dispositif de transmission radio comprenant :

un premier répéteur de bits (103) destiné à augmenter le nombre de bits de données soumises à un codage de correction d'erreur en répétant une partie des bits,
un module d'entrelacement (104) destiné à entrelacer les bits, dont le nombre a été augmenté par le premier répéteur de bits (103), et
un second répéteur de bits (105) destiné à augmenter le nombre des bits entrelacés en répétant une partie des bits fournis en sortie par le module d'entrelacement (104) qui n'ont pas été répétés par le premier répéteur de bits (103).

2. Dispositif de transmission radio selon la revendication 1, comprenant en outre :

un codeur de correction d'erreur (102) destiné à soumettre à un codage de correction d'erreur un certain nombre de bits, dans lequel le premier répéteur de bits (103) augmente le nombre des bits soumis à un codage de correction d'erreur.

3. Dispositif de transmission radio selon la revendication 2, dans lequel le premier répéteur de bits (103) augmente le nombre des bits soumis à un codage de correction d'erreur conformément au taux de codage de correction d'erreur.

4. Dispositif de réception radio destiné à recevoir des données soumises à un codage de correction d'erreur dont le nombre des bits a été augmenté au moyen d'une répétition avant et après un entrelacement au niveau d'un dispositif de transmission radio, dans lequel, lors de l'augmentation du nombre de bits après entrelacement, le dispositif de transmission a répété une partie des bits entrelacés, qui n'ont pas été répétés avant l'entrelacement, le dispositif de réception radio comprenant :

un récepteur destiné à recevoir les données dont le nombre de bits a été augmenté, un premier moyen de ponction (111) destiné à ponctionner les bits reçus qui ont été répétés après un entrelacement au niveau du dispositif de transmission radio, et un module de désentrelacement (112) destiné à désentrelacer les bits reçus dont le nombre a été diminué par ponction dans le premier moyen de ponction (111), et un second moyen de ponction (113) destiné à ponctionner les bits désentrelacés, dans lequel le second moyen de ponction (113) est conçu pour ponctionner les bits parmi les bits désentrelacés qui ont été répétés avant l'entrelacement au niveau du dispositif de transmission radio.

5. Dispositif de terminal de communication comprenant le dispositif de transmission radio selon l'une des revendications 1 à 3 ou le dispositif de réception radio selon la revendication 4.

6. Dispositif de station de base comprenant le dispositif de transmission radio selon l'une des revendications 1 à 3 ou le dispositif de réception radio selon la revendication 4.

7. Procédé de transmission radio comprenant :

une première étape destinée à augmenter le nombre des bits de données soumises à un codage de correction d'erreur en répétant une partie des bits, et une seconde étape destinée à entrelacer les bits, dont le nombre a été augmenté dans la première étape, une troisième étape destinée à augmenter le nombre de bits entrelacés en répétant une partie des bits entrelacés qui n'ont pas été répétés dans la première étape, et une quatrième étape destinée à transmettre les données comprenant les bits fournis par l'augmentation lors de la troisième étape.

8. Procédé de réception radio comprenant :

une première étape destinée à recevoir des données soumises à un codage de correction d'erreur dont le nombre de bits a été augmenté avant et après un entrelacement du côté émission, dans lequel, lors de l'augmentation du nombre des bits après un entrelacement du côté émission, une partie des bits entrelacés qui n'ont pas été répétés avant l'entrelacement, a été répétée, une seconde étape destinée à ponctionner les bits reçus qui ont été répétés après un entrelacement du côté émission, une troisième étape destinée à désentrelacer les bits reçus dont le nombre a été augmenté par ponction lors de la seconde étape, et une quatrième étape destinée à ponctionner les bits désentrelacés, où les bits parmi les bits désentrelacés qui ont été répétés avant l'entrelacement du côté émission, sont ponctionnés.

CODING PROCESSING APPARATUS

TRANSMISSION ANTENNA
7

1

2 CODER

3 ERROR CORRECTION CODER

4 REPETITION SECTION

5 INTERLEAVING SECTION

. . .

6 TRANSMITTED DATA

FIG.1A

RECEPTION ANTENNA
15

10 DECODING PROCESSING APPARATUS

. . .

11 DEINTERLEAVING SECTION

12 PUNCTURING SECTION

13 ERROR CORRECTION DECODER

14 DECODER

16 RECEIVED DATA

FIG.1B

DATA BEFORE ERROR
CORRECTION CODING   { D1,   D2,   D3 ,   D4 }

DATA AFTER ERROR
CORRECTION CODING   {d1,d2,d3,d4,d5,d6,d7,d8}

REPETITION                    RATE MATCHING TABLE
(8 BITS→12 BITS)              {1,0,1,0,1,0,1,0}

DATA AFTER
REPETITION          {d1,d1,d2,d3,d3,d4,d5,d5,d6,d7,d7,d8}

INTERLEAVING                  INTERLEAVING PATTERN
                              12[4(2 × 2) × 3(2 × 2)]

DATA AFTER
INTERLEAVING        {d1,d5,d3,d7,d2,d6,d4,d8,d1,d5,d3,d7}

FIG.2

EP 1 083 662 B1

100 CODING PROCESSING APPARATUS

101 CODER

102 ERROR CORRECTION CODER

103 FIRST REPETITION SECTION

104 INTER-LEAVING SECTION

105 SECOND REPETITION SECTION

106 TRANSMITTED DATA

107 TRANSMISSION ANTENNA

FIG.3A

110 DECODING PROCESSING APPARATUS

111 FIRST PUNCTURING SECTION

112 DEINTER-LEAVING SECTION

113 SECOND PUNCTURING SECTION

114 ERROR CORRECTION DECODER

115 DECODER

116 RECEPTION ANTENNA

117 RECEIVED DATA

FIG.3B

16

103 FIRST REPETITION SECTION

202
PARAMETER
STORAGE
SECTION

201
INPUT
MEMORY

203
CONTROLLER

204
MEMORY READ/
WRITE SECTION

205
OUTPUT
MEMORY

FIG.4

EP 1 083 662 B1

START

CALCULATION OF THE TOTAL NUMBER OF BITS 'R' FOR REPETITION — ST301

CALCULATION OF THE NUMBER OF BITS 'r1' FOR FIRST REPETITION — ST302

CALCULATION OF FIRST REPETITION INTERVAL 'X1' — ST303

COMPENSATION OF 'X1' AND 'r1' — ST304

Loop:Ct=1toN0 — ST305

$\mathrm{mod}(Ct, X1')=b1?$ — ST306

NO

YES

n=1 — ST308

n=2 — ST307

WRITE DATA n TIMES — ST309

$Ct \geqq N0?$ — ST310

NO

YES

END

FIG.5

EP 1 083 662 B1

FIG.6

19

```
                    ┌─────────────┐
                    │    START    │
                    └──────┬──────┘
                           │
              ┌────────────▼────────────┐
              │   SETTING FIRST         │  ST501
              │   PUNCTURING            │
              │   INTERVAL 'X2'         │
              └────────────┬────────────┘
                           │          ST502
                    ┌──────▼──────────┐
                    │  Loop:Ct=1toN   │◄─────────┐
                    └──────┬──────────┘          │
                           │        ST503        │
        YES          ◄─────▼─────────┐           │
    ┌─────────  mod(Ct,X2)=b2?       │           │
    │            └─────┬─────────────┘           │
    │                  │ NO                       │
    │        ┌─────────▼─────────┐  ST504        │
    │        │    WRITE DATA     │               │
    │        └─────────┬─────────┘               │
    │                  │                          │
    └──────────────────►                          │
                       │         ST505            │
                  ◄────▼─────────┐      NO        │
                     Ct≧N?       ├───────────────┘
                   └────┬────────┘
                        │ YES
                  ┌─────▼─────┐
                  │    END    │
                  └───────────┘
```

FIG.7

START

SETTING SECOND PUNCTURING INTERVAL 'X1' — ST601

Loop:Ct=1toN1 — ST602

mod(Ct,X1')=b1? — ST603

YES

NO

WRITE DATA — ST604

Ct≧N1? — ST605

NO

YES

END

FIG.8

DATA BEFORE ERROR
CORRECTION CODING

{ D1, D2, D3, D4 }

DATA AFTER ERROR
CORRECTION CODING

{d1,d2,d3,d4,d5,d6,d7,d8}

FIRST REPETITION
(8 BITS→10 BITS)

DATA AFTER
FIRST REPETITION

{d1,__d2__,__d2__,d3,d4,d5,__d6__,__d6__,d7,d8}

INTERLEAVING

INTERLEAVING PATTERN
$10[5(3 \times 2) \times 2]$

DATA AFTER
INTERLEAVING

{d1,d4,d7,__d2__,__d6__,__d2__,d5,d8,d3,__d6__}

SECOND REPETITION
(10 BITS→12 BITS)

DATA AFTER
SECOND REPETITION

{d1,__d4__,__d4__,d7,__d2__,__d6__,__d2__,__d5__,__d5__,d8,d3,__d6__}

FIG.9

EP 1 083 662 B1

800 CODING PROCESSING APPARATUS

TRANSMISSION ANTENNA
107

| 101 | 102 | 103 | 104 |
|---|---|---|---|
| CODER | ERROR CORRECTION CODER | FIRST REPETITION SECTION | INTER-LEAVING SECTION |

106
TRANSMITTED DATA

FIG.1OA

810 DECODING PROCESSING APPARATUS

RECEPTION ANTENNA 116

| 112 | 113 | 114 | 115 |
|---|---|---|---|
| DEINTER-LEAVING SECTION | SECOND PUNCTURING SECTION | ERROR CORRECTION DECODER | DECODER |

117
RECEIVED DATA

FIG.1OB

EP 1 083 662 B1

900 CODING PROCESSING APPARATUS

TRANSMISSION
ANTENNA
107

| 101 | 102 | 104 | 105 |
|---|---|---|---|
| CODER | ERROR CORRECTION CODER | INTER-LEAVING SECTION | SECOND REPETITION SECTION |

· · ·

106
TRANSMITTED
DATA

FIG.11A

910 DECODING PROCESSING APPARATUS

RECEPTION
ANTENNA 116

· · ·

| 111 | 112 | 114 | 115 |
|---|---|---|---|
| FIRST PUNCTURING SECTION | DEINTER-LEAVING SECTION | ERROR CORRECTION DECODER | DECODER |

117
RECEIVED
DATA

FIG.11B